# DEMANDE DE BREVET EUROPEEN

(11) **EP 4 848 121 A1**
(43) Date de publication de la demande: **02.12.2026**
(21) Numéro de dépôt: 26180445.4
(22) Date de dépôt: 22.05.2026
(51) Int. Cl.: G06F 21/55, G06F 12/14, G06F 21/70, G06F 21/75, G06F 21/78, G06Q 20/34, G06F 12/02

(54) **PROCEDE DE PROTECTION D'UNE MEMOIRE**

(30) Priorité: 28.05.2025 FR 2505778
(71) Demandeur: STMicroelectronics International N.V., 1228 Plan-les-Ouates, Geneva (CH)
(72) Inventeur: DOCQUIER, Guillaume, 4300 WAREMME (BE); NICOLAES, Michael, 1190 FOREST (BE)
(74) Mandataire: Cabinet Beaumont

(57) **Abrégé**

La présente description concerne un procédé (400) de protection d'une mémoire non volatile comprenant au moins un premier groupe de points mémoire et un compteur, dans lequel la valeur dudit compteur est incrémentée à chaque mise en oeuvre d'un procédé (450) de recouvrement de données suite à une coupure d'alimentation.

## Description

### Domaine technique

La présente description concerne de façon générale les systèmes et dispositifs électroniques, et plus particulièrement la sécurité de ces systèmes et dispositifs électroniques. Plus précisément, la présente description se rapporte à la sécurité des mémoires non volatiles, en particulier la sécurité de ces mémoires contre les attaques par coupure d'alimentation.

### Technique antérieure

La sécurité informatique est intrinsèquement liée à la sécurité des mémoires stockant des données. Une attaque courante permettant de comprendre le fonctionnement d'un dispositif électronique et aussi de récupérer des données stockées dans une mémoire est une attaque par coupure d'alimentation, ou encore permet d'éviter qu'une autre attaque ne soit détectée. Une telle attaque implique de couper l'alimentation d'une partie ou de la totalité d'un dispositif électronique puis d'en observer le comportement.

Il serait souhaitable de pouvoir améliorer, au moins en partie, certains aspects des procédés de protection connus des mémoires non volatiles.

### Résumé de l'invention

Il existe un besoin pour des procédés de protection de mémoires, et en particulier de mémoires non volatiles, plus performants.

Il existe un besoin pour des mémoires, et en particulier des mémoires non volatiles, plus sécurisées.

Il existe un besoin pour des procédés de protection de mémoires, et en particulier de mémoires non volatiles, plus performants contre les attaques de type attaque par coupure d'alimentation.

Il existe un besoin des mémoires, et en particulier des mémoires non volatiles, plus sécurisées contre les attaques de type attaque par coupure d'alimentation.

Un mode de réalisation pallie tout ou partie des inconvénients des procédés de protection connus de mémoire non volatiles.

Un mode de réalisation pallie tout ou partie des inconvénients des mémoires non volatiles connues.

Un mode de réalisation prévoit l'utilisation d'un compteur dont la valeur représente le nombre de mises en oeuvre d'un mécanisme de recouvrement de données suite à une coupure d'alimentation.

Un mode de réalisation prévoit le stockage de la valeur de ce compteur dans des métadonnées de groupes de données de la mémoire non volatile.

Un mode de réalisation prévoit un procédé de protection d'une mémoire non volatile comprenant au moins un premier groupe de points mémoire et un compteur, dans lequel la valeur dudit compteur est incrémentée à chaque mise en oeuvre d'un procédé de recouvrement de données suite à une coupure d'alimentation.

Un autre mode de réalisation prévoit une mémoire non volatile comprenant au moins un premier groupe de points mémoire et un compteur dont la valeur est incrémentée à chaque mise en oeuvre d'un procédé de recouvrement de données suite à une coupure d'alimentation.

Selon un mode de réalisation, ladite valeur dudit compteur est copiée dans une métadonnée dudit premier groupe de points mémoire.

Selon un mode de réalisation, ladite valeur dudit compteur est copiée dans des métadonnées de tout groupe de points mémoire suivant ledit premier groupe de points mémoire.

Selon un mode de réalisation, ladite valeur dudit compteur est initialement égale à zéro.

Selon un mode de réalisation, la valeur dudit compteur est incrémentée au début de chaque mise en oeuvre d'un procédé de recouvrement de données suite à une coupure d'alimentation.

Selon un mode de réalisation, la valeur dudit compteur est incrémentée à la fin de chaque mise en oeuvre d'un procédé de recouvrement de données suite à une coupure d'alimentation.

Selon un mode de réalisation, ladite mémoire non volatile est une mémoire flash.

Un autre mode de réalisation prévoit un dispositif électronique comprenant une mémoire décrite précédemment.

Un autre mode de réalisation prévoit un programme d'ordinateur comprenant des instructions de code de programme pour l'exécution des étapes du procédé décrit précédemment lorsque ledit programme est exécuté sur un ordinateur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un exemple de dispositif électronique adapté à mettre en oeuvre les modes de réalisation décrits ci-après ;
la figure 2 représente, schématiquement et sous forme de blocs, une mémoire non volatile selon un mode de réalisation ;
la figure 3 représente une mise en oeuvre d'une opération de programmation de données dans la mémoire de la figure 2 ;
la figure 4 représente un mode de mise en oeuvre d'un procédé de protection de la mémoire de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire.

Sauf précision contraire, les expressions « environ », « approximativement », « sensiblement », et « de l'ordre de » signifient à 10 % ou à 10° près, de préférence à 5 % ou à 5° près.

Les modes de réalisation décrits ci-après concernent la protection de la programmation de données, ou de l'écriture de données, dans une mémoire non volatile. En particulier, ces modes de réalisation visent à la détection d'attaques par coupure d'alimentation visant une mémoire non volatile. Il est connu de protéger les mémoires non volatiles des coupures d'alimentation en leur incluant des mécanismes de recouvrement de données suite à une coupure d'alimentation. Cependant, ces mécanismes ne sont pas en mesure de différencier une coupure d'alimentation volontaire d'une attaque par coupure d'alimentation dans laquelle plusieurs attaques par coupure de d'alimentation sont réalisées de manière successive.

La solution apportée par les modes de réalisation décrits en détails ci-après est l'utilisation d'un compteur de mise en oeuvre du mécanisme de recouvrement de données suite à une coupure d'alimentation. La valeur de ce compteur est enregistrée dans les métadonnées des pages de points mémoires de la mémoire non volatile.

De plus, les modes de réalisation décrits ci-après sont tout particulièrement adaptés à des dispositifs électroniques utilisant des fonctions sécurisées.

De plus, les modes de réalisation décrits ci-dessous sont particulièrement adaptés pour être utilisés dans tout type de marchés industriels où l'utilisation d'une mémoire non volatile est nécessaire. Plus particulièrement, un tel procédé de protection d'une mémoire non volatile peut être destiné à :
- l'industrie automobile, par exemple dans le domaine de l'électrification automobile ou dans le domaine des systèmes avancés d'aide à la conduite (Advanced Driver Assistance Systems - ADAS) ;
- le secteur industriel, par exemple dans le domaine de l'énergie verte, dans le domaine de l'électrification des infrastructures, de l'internet des objets (Internet of Things
- IoT) et des maisons intelligentes (SmartHome), où la consommation d'électricité et d'énergie et l'échange de données sont des éléments clés ;
- l'industrie de l'électronique personnelle, par exemple dans le domaine de la téléphonie mobile et de l'internet des objets (Internet of Things - IoT), ainsi que dans le domaine des interfaces haut débit ; et
- l'industrie des équipements de communication, des ordinateurs et des périphériques, par exemple dans le domaine des infrastructures et des centres de données (Data Centers), et dans le domaine des satellites en orbite terrestre basse (Low Earth Orbit - LEO).

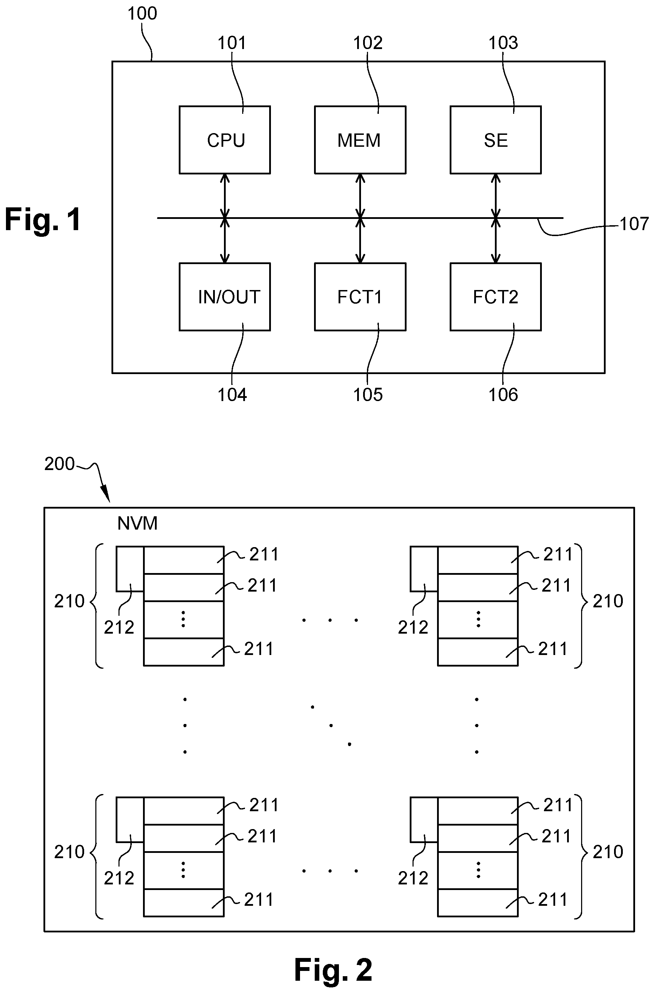

La figure 1 est un schéma bloc représentant, très schématiquement, une architecture d'un exemple d'un dispositif électronique 100 adapté à comprendre une mémoire non volatile et à mettre en oeuvre un procédé de protection d'une telle mémoire.

Selon un exemple, le dispositif électronique 100 comprend un processeur 101 (CPU) adapté à mettre en oeuvre différents traitements de données stockées dans des mémoires et/ou fournies par d'autres circuits du dispositif 100. Selon un mode de réalisation, le processeur 101 est adapté à mettre en oeuvre un procédé de protection d'une mémoire non volatile.

Selon un mode de réalisation, le dispositif électronique 100 comprend, en outre, différents types de mémoires 102 (MEM), parmi lesquelles, par exemple, une mémoire non volatile, une mémoire volatile, et/ou une mémoire morte. Chaque mémoire 102 est adaptée à stocker différents types de données.

Selon un exemple, le dispositif électronique 100 comprend, en outre, par exemple, un élément sécurisé 103 (SE) adapté à traiter des données sensibles et/ou secrètes. L'élément sécurisé 103 peut comprendre son ou ses propres processeurs, son ou ses propres mémoires, etc. Selon un mode de réalisation, l'élément sécurisé 101 est adapté à mettre en oeuvre un procédé de protection d'une mémoire non volatile.

Selon un exemple, le dispositif électronique 100 peut comprendre, en outre, des circuits d'interface 104 (IN/OUT) adaptés à envoyer et/ou à recevoir des données provenant de l'extérieur du dispositif 100. Les circuits d'interface 104 peuvent être, en outre, adaptés à mettre en oeuvre un affichage de données, par exemple, un écran d'affichage.

Selon un exemple, le dispositif électronique 100 comprend, en outre, différents circuits 105 (FCT1) et 106 (FCT2) adaptés à réaliser différentes fonctions. A titre d'exemple, les circuits 105 et 106 peuvent comprendre des circuits de mesure, des circuits de conversion de données, etc. Selon un mode de réalisation, les circuits 105 et 106 peuvent comprendre un circuit adapté à mettre en oeuvre un procédé de protection d'une mémoire non volatile.

Selon un exemple, le dispositif électronique 100 comprend, en outre, un ou plusieurs bus de données 107 adaptés à transférer des données entre ses différents composants.

Selon un exemple particulier, le dispositif électronique 100 est adapté à mettre en oeuvre des programmes informatiques, et en particulier un programme informatique permettant de mettre en oeuvre un procédé de protection d'une mémoire non volatile.

La figure 2 représente, très schématiquement et sous forme de blocs, un mode de réalisation d'une mémoire non volatile 200 (NVM).

Selon un mode de réalisation, la mémoire 200 comprend plusieurs points mémoires 211 organisés en groupes de points mémoire 210. Ces groupes 210 sont aussi appelés des pages de points mémoire, ou pages. Un groupe 210 correspond à l'entité d'effacement minimale de la mémoire 200. Dit autrement, une opération d'effacement de données écrites dans la mémoire 200 ne peut être appliqué qu'à un ensemble de points mémoire 211 comprenant moins de points mémoires qu'un groupe 210. Selon un exemple, chaque groupe 210 comprend le même nombre de points mémoire. Selon un exemple, chaque groupe 210 comprend 512 points mémoires.

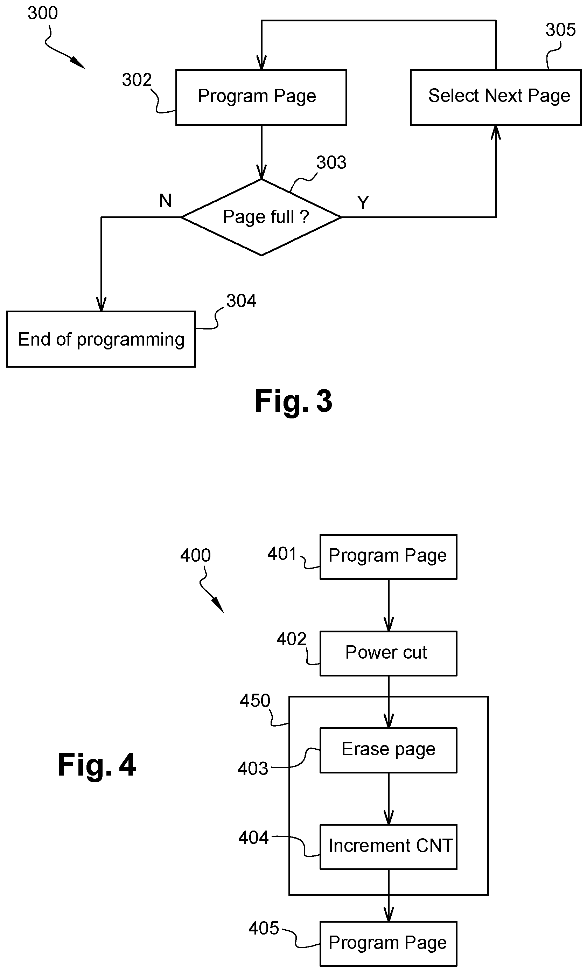

Selon un mode de réalisation, la mémoire 200 est adaptée à mettre en oeuvre un mécanisme de protection contre les coupures d'alimentation (anti-tearing mecanism). Selon un mode de réalisation, la mémoire 200 est tout particulièrement adapté à mettre en oeuvre un procédé de recouvrement de données suite à une coupure d'alimentation, aussi appelé coupure de courant. Selon un exemple, si une coupure d'alimentation survient pendant une opération d'écriture de données dans la mémoire 200, une opération d'effacement du groupe 210 dans lequel des données sont écrites est mise en oeuvre, puis une nouvelle opération d'écriture est mise en oeuvre. Un tel procédé est décrit succinctement en relation avec la figure 4.

Selon un mode de réalisation, chaque groupe 210 de points mémoire 211 comprend, en outre, des métadonnées 212 permettant de stocker des informations à propos de chaque groupe. Selon un mode de réalisation, ces métadonnées 212 comprennent au moins une métadonnée adaptée à stocker la valeur d'un compteur qui est incrémentée à chaque mise en oeuvre du procédé de recouvrement de données suite à une coupure d'alimentation.

Selon un mode de réalisation préféré, la mémoire non volatile 200 est une mémoire de type flash. D'autres types de mémoire non volatile peuvent être envisagés.

La figure 3 illustre la mise en oeuvre d'une opération d'écriture de données dans la mémoire 200, et la figure 4 illustre la mise en oeuvre d'un procédé de protection de la mémoire 200.

La figure 3 est un schéma bloc illustrant la mise en oeuvre d'une opération 300 d'écriture de données dans la mémoire 200 décrite en relation avec la figure 2.

A une étape initiale 302 (Program Page), un premier groupe 210 de points mémoires 211 de la mémoire 200 est sélectionné et les données à écrire sont écrites dans les points mémoire du groupe 210. Selon un exemple, l'étape 302 peut être précédée par une étape d'effacement de données précédemment écrites dans le groupe 210 sélectionné.

A une étape 303 (Page Full?), successive à l'étape 302, si le groupe 210 utilisé à l'étape 302 a un nombre de points mémoire suffisant pour accueillir toutes les données à écrire, l'étape suivante (Sortie N) est une étape 304 (End of Programming), sinon l'étape suivante (Sortie Y) est une étape 305 (Select Next Page).

A l'étape 304, successive à l'étape 303, toutes les données ont été écrites en mémoire, l'opération d'écriture 300 est terminée.

A l'étape 305, successive à l'étape 303, un groupe 210 de points mémoire 211 n'a pas l'espace mémoire suffisant pour réaliser l'opération d'écriture 300. Un deuxième groupe 210 de points mémoire 211 est donc sélectionné, et l'opération 302 est répétée. Selon un exemple, le deuxième groupe 210 est le groupe suivant le premier groupe 210, c'est-à-dire un groupe 210 dont les adresses des points mémoires suivent les adresses des points mémoires du premier groupe 210.

La figure 4 est un schéma bloc illustrant la mise en oeuvre d'un procédé 400 de protection de la mémoire 200 mis en oeuvre lorsqu'une opération d'écriture du type de l'opération d'écriture 300 est interrompue par une coupure d'alimentation.

A une étape initiale 401 (Program Page), une opération d'écriture de données en mémoire du type de l'opération 300 de la figure 3 est en cours d'exécution. Selon un exemple, l'étape 302 de l'opération 300 est cours d'exécution. Ainsi une groupe 210 de points mémoire 211 est sélectionné.

A une étape 402 (Power Cut), successive à l'étape 401, une coupure d'alimentation de la mémoire 200 a lieu. Cette coupure interrompt l'étape 401 et donc l'opération d'écriture de données en mémoire.

Un procédé 450 de recouvrement de données suite à une coupure d'alimentation est mis en oeuvre. Ce procédé 450 comprend au moins une étape 403 (Erase) d'effacement du groupe 210 de points mémoires 211 de la mémoire 200 en cours d'écriture à l'étape 401. Le procédé 450 peut comprendre d'autres étapes permettant le recouvrement de données perdues suite à une coupure d'alimentation. Selon un exemple, le procédé 450 est différent d'un procédé de détection d'erreur puisqu'il permet, en outre, le recouvrement de données perdues suite à une coupure d'alimentation.

Selon un mode de réalisation, le procédé 450 comprend, en outre, une étape 404 d'incrémentation de la valeur du compteur de la mémoire 200 permettant de compter le nombre de mises en oeuvre du procédé 450. Selon un exemple, cette valeur est initialement égale à zéro (0). Selon un mode de réalisation, la valeur du compteur est incrémentée puis est stockée dans une des métadonnées du groupe 210 de points mémoires 211 sélectionné à l'étape 401. Selon un mode de réalisation, la valeur du compteur est également stockée dans une des métadonnées des groupes 210 de points mémoires 211 suivant le groupe 210 de points mémoires 211 sélectionné à l'étape 401.

Dans l'exemple illustré en figure 4, l'opération 404 est mise en oeuvre après la mise en oeuvre de l'étape 403, mais en pratique l'opération 404 peut également être mise en oeuvre avant l'étape 403. De façon plus générale, l'étape 404 peut aussi bien être mise en oeuvre au début de chaque mise en oeuvre du procédé 450 qu'à la fin de chacune de ces mises en oeuvre. De même, l'étape 404 peut être mise en oeuvre entre plusieurs étapes du procédé 450.

A une étape 405 (Program Page), successive au procédé 450, le procédé 450 a terminé sa mise en oeuvre, l'opération d'écriture de l'étape 401 peut être réexécutée.

Ainsi un procédé de protection 400 de la mémoire non volatile 200 comprend une étape d'incrémentation de la valeur du compteur de mise en oeuvre d'un procédé de recouvrement de données suite à une coupure d'alimentation à chaque mise en oeuvre d'un procédé de recouvrement de données suite à une coupure d'alimentation.

Ce procédé 400 peut être mis en oeuvre grâce à un programme d'ordinateur comprenant des instructions de code de programme pour l'exécution des étapes de ce procédé lorsque ledit programme est exécuté sur un ordinateur.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Procédé (400) de protection d'une mémoire non volatile (200) comprenant au moins un premier groupe (210) de points mémoire (211) et un compteur, dans lequel la valeur dudit compteur est incrémentée à chaque mise en oeuvre d'un procédé (450) de recouvrement de données suite à une coupure d'alimentation.

2. Mémoire non volatile (200) comprenant au moins un premier groupe (210) de points mémoire (211) et un compteur dont la valeur est incrémentée à chaque mise en oeuvre d'un procédé (450) de recouvrement de données suite à une coupure d'alimentation.

3. Procédé selon la revendication 1, ou mémoire selon la revendication 2, dans lequel ladite valeur dudit compteur est copiée dans une métadonnée (212) dudit premier groupe (210) de points mémoire.

4. Procédé selon la revendication 1 ou 3, ou mémoire selon la revendication 2 ou 3, dans lequel ladite valeur dudit compteur est copiée dans des métadonnées (212) de tout groupe (210) de points mémoire (211) suivant ledit premier groupe (210) de points mémoire.

5. Procédé selon l'une quelconque des revendications 1, 3 ou 4, ou mémoire selon l'une quelconque des revendications 2 à 4, dans lequel ladite valeur dudit compteur est initialement égale à zéro.

6. Procédé selon l'une quelconque des revendications 1, 3 à 5, ou mémoire selon l'une quelconque des revendications 2 à 5, dans lequel la valeur dudit compteur est incrémentée au début de chaque mise en oeuvre d'un procédé (450) de recouvrement de données suite à une coupure d'alimentation.

7. Procédé selon l'une quelconque des revendications 1, 3 à 5, ou mémoire selon l'une quelconque des revendications 2 à 5, dans lequel la valeur dudit compteur est incrémentée à la fin de chaque mise en oeuvre d'un procédé (450) de recouvrement de données suite à une coupure d'alimentation.

8. Procédé selon l'une quelconque des revendications 1, 3 à 7, ou mémoire selon l'une quelconque des revendications 2 à 7, dans lequel ladite mémoire non volatile (200) est une mémoire flash.

9. Dispositif électronique comprenant une mémoire selon l'une quelconque des revendications 2 à 8.

10. Programme d'ordinateur comprenant des instructions de code de programme pour l'exécution des étapes du procédé selon l'une quelconque des revendications 1, 3 à 8 lorsque ledit programme est exécuté sur un ordinateur.
